# EUROPEAN PATENT APPLICATION

(11) **EP 2 390 178 A2**
(43) Date of publication of application: **30.11.2011**
(21) Application number: 11165283.0
(22) Date of filing: 09.05.2011
(51) Int. Cl.: B64C 11/24, F03D 7/02

(54) **Rotor blade having passive bleed path**

(30) Priority: 28.05.2010 US 790091
(71) Applicant: Lockheed Martin Corporation (Maryland Corp.), Bethesda MD 20817 (US)
(72) Inventor: Denner, Brett W., Fort Worth, TX 76123 (US); Domel, Neal D., Aledo, TX 76008 (US)
(74) Representative: Harrison Goddard Foote

(57) **Abstract**

A rotor blade (14) includes a bleed path (30) opening to a suction surface (28) eg. via inlet (32), extending through the blade (14), eg. via conduit (34), and exiting, eg. via outlet (36), to at least one of the suction surface (28) or a trailing surface (24). Working fluid flows through the bleed path (30) under centrifugal pumping forces when the blade rotates to passively bleed working fluid from the suction surface (28).

## Description

### BACKGROUND

### TECHNICAL FIELD

This invention relates generally to rotors having radially extending working members and, more particularly, to impellers and propellers having blades with fluid passages open to a working fluid.

### BACKGROUND ART

Rotors typically include a hub for coupling to some other device like a prime mover or an electrical machine, and one or more radially extending working members for acting on, or reacting with, a working fluid. For example, an aircraft propeller typically includes a hub coupled to an engine output shaft, and several blades extending radially outwardly from the hub. The engine output shaft rotates the hub to rotate the blades, which convert rotational forces into aerial thrust forces to propel an aircraft through the air. In another example, a wind turbine impeller typically includes a hub coupled to a generator input shaft, and several blades extending radially outwardly from the hub. Wind impacts the blades, which convert wind thrust to hub rotation for rotating the generator input shaft to generate electricity within the generator. Similar examples exist for marine propellers, turbine engine rotors, helicopter rotors, and the like.

### BRIEF SUMMARY

A rotor blade includes a root region, a tip region disposed radially outwardly of the root region, leading and trailing surfaces extending between the root and tip regions, and pressure and suction surfaces extending between the root and tip regions and the leading and trailing surfaces. The blade also includes a bleed path that opens to the suction surface, extends through the blade, and exits to at least one of the suction or trailing surfaces. Working fluid flows through the bleed path under centrifugal pumping forces when the blade rotates, to passively bleed working fluid from the suction surface.

Additionally provided is a rotor including the aforementioned rotor blade, wherein the bleed path is configured such that the working fluid passively flows through the bleed path under negative pressurization, but does not actively flow therethrough by positive pressurization from some external pressurizing device or from a path open to the pressure surface. The bleed path includes an inlet in the suction surface to receive the working fluid on the suction surface, a conduit in communication with the inlet to convey the working fluid from the inlet toward the tip region, and an outlet in communication with the conduit and disposed radially outwardly of the inlet to exhaust the working fluid out of the blade.

Also provided is a rotor blade that includes a root region, a tip region disposed radially outwardly of the root region, leading and trailing surfaces extending between the root and tip regions, and pressure and suction surfaces extending between the root and tip regions and the leading and trailing surfaces. The rotor blade also includes a bleed path opening to the suction surface and including an inlet in the suction surface to receive working fluid on the suction surface. The bleed path further includes a conduit in communication with the inlet to convey the working fluid from the inlet toward the tip region, and an outlet in communication with the conduit and disposed radially outwardly of the inlet to exhaust the working fluid out of the blade.

### BRIEF DESCRIPTION OF THE SEVERAL VIEWS OF THE DRAWINGS

These and other features and advantages will become apparent to those skilled in the art in connection with the following detailed description and drawings of one or more embodiments of the invention, in which:

Figure 1 is a plan view of an example embodiment of a rotor including a hub and blades;

Figure 2 is an enlarged cross-sectional view through line 2-2 of one of the blades of Figure 1;

Figure 3 is an enlarged fragmentary side view taken along line 3 of one of the blades of Figure 1;

Figure 4 is an enlarged fragmentary perspective view of one of the blades of Figure 1;

Figure 5 is an enlarged cross-sectional view of a prior art rotor blade, and illustrating laminar separation of a working fluid with respect thereto; and

Figure 6 is an enlarged cross-sectional view of an exemplary rotor blade having a bleed path, and illustrating attached flow of a working fluid with respect thereto.

### DETAILED DESCRIPTION

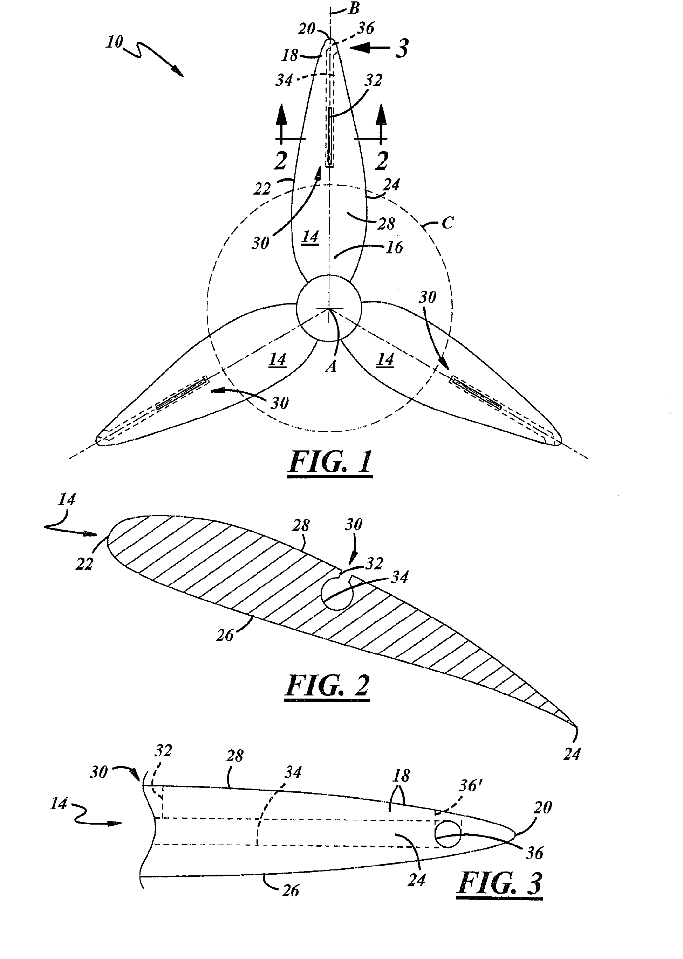

Figure 1 illustrates an exemplary embodiment of a rotor 10 including a hub 12 defining a rotational axis A of the rotor 10, which is intended to rotate in a counter-clockwise direction about the axis A. The rotor 10 also includes one or more of a rotor blade 14 extending generally radially outwardly from the hub 12 along a longitudinal axis B of the blade 14. Although three separate blades 14 are shown, any suitable quantity of blades may be used. In general, the components of the rotor 10 can be manufactured according to techniques known to those skilled in the art, including casting, forging, molding, machining, stamping, and/or the like. Likewise, any suitable materials can be used in making the components, such as metals like aluminum or steel, composites, polymeric materials, and/or the like.

The example embodiment will be described and illustrated with reference to its use in an aircraft propeller environment. However, it will be appreciated as the description proceeds that the invention is useful in many different applications and may be implemented in many other embodiments. In this regard, and as used herein and in the claims, it will be understood that the term "rotor" refers not only to aircraft propeller applications, but also to windmill impellers, marine propellers, turbine engine rotors, helicopter rotors, and various other applications, and regardless of the type of working fluid used in conjunction with the rotor.

Still referring to Figure 1, the blade 14 includes a root region 16 proximate the hub 12, and a tip region 18 distal the hub 12 and disposed radially outwardly of the root region 16. The root region 16 may be integrally or separately coupled to the hub 14 for example, by forming, casting, forging, welding, fastening, or in any other suitable manner. The tip region 18 may include a radially outermost surface 20 of the blade 14. The blade 14 also includes a leading edge or surface 22 extending between the root and tip regions 16, 18, and a trailing edge or surface 24 extending between the root and tip regions 16, 18. The leading and trailing surfaces 22, 24 may be rounded, flat, pointed, and/or of any other suitable shape(s).

Referring also to Figure 2, the blade 14 further includes a first or pressure surface 26 extending between the root and tip regions 16, 18 (Figure 1) and the leading and trailing surfaces 22, 24, and a second or suction surface 28 extending between the root and tip regions 16, 18 (Figure 1) and the leading and trailing surfaces 22, 24. The suction surface 28 may be generally convex as shown and the pressure surface 26 may be generally concave as shown, wherein the blade 14 may be shaped as an aerofoil. However, the suction and pressure surfaces 26, 28 may be of any suitable shape(s) or contour(s) and the blade 14 need not be aerofoil-shaped and may be of any suitable shape and disposed at any suitable angle(s).

With continuing reference to Figures 1 and 2, the blade 14 additionally includes a bleed path 30 opening to the suction surface 28, extending through the blade 14, and exiting to the suction surface 28, the trailing surface 24, or both. The bleed path 30 is provided to bleed low energy working fluid from the suction surface 28 to improve blade efficiency. Working fluid flows into, through, and out of the bleed path under centrifugal pumping forces to passively bleed working fluid from the suction surface 28 and thereby prevent or reduce boundary layer separation and/or a laminar separation bubble of working fluid on the suction surface 28.

As shown in Figure 1, the bleed path 30 generally may extend along, or parallel with respect to, the blade axis B. However, the bleed path 30 may be disposed at any suitable angle with respect to the axis B, and need not be centered between the leading and trailing surfaces 22, 24. As also shown in Figure 1, the bleed path 30 may be disposed radially outwardly of an imaginary circle or circumferential axis C that may bisect the length of each blade 14. In another embodiment, a portion of the bleed path 30 may extend radially inwardly of the axis C. For example, at least part of an inlet portion of the bleed path 30 may extend radially inwardly of the axis C.

Still referring to Figure 1, the bleed path 30 includes an inlet 32 located in the suction surface 28 to receive working fluid on the suction surface 28, and a conduit 34 in communication with the inlet 32 to convey the working fluid from the inlet 32 in a radially outward direction toward the tip region 18 of the blade 14. As shown in Figures 1 and 3, the bleed path 30 also includes an outlet 36 in communication with the conduit 34 and disposed radially outwardly of the inlet 32 to exhaust the working fluid out of the blade 14.

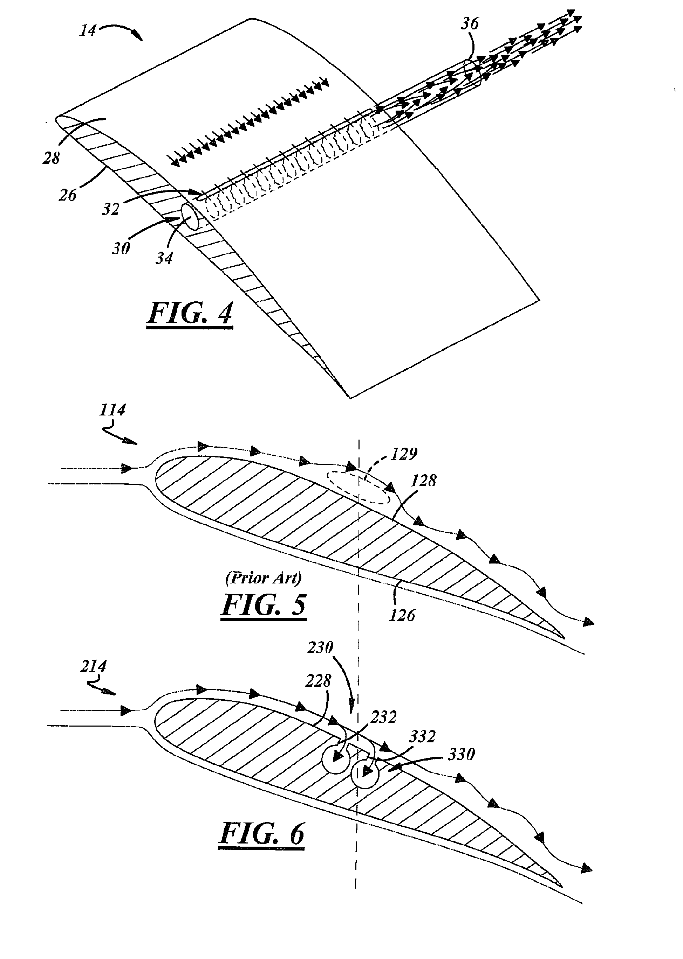

Referring to Figure 4, and as depicted by the arrows, centrifugal pumping forces pull working fluid into the inlet 32, through the conduit 34, and out of the outlet 36. (See Fig. 1 for example location of outlet 36 in the blade 14) Such fluid flow may reduce or thin a boundary layer, and also may at least reduce, and preferably prevent, laminar separation of the working fluid on the suction surface 28 of the blade 14. The working fluid passively flows through the bleed path 30 under vacuum or negative pressurization pulled from the outlet 36. In other words, the working fluid may not actively flow through the bleed path 30 under positive pressurization pushed from the inlet 32 toward the outlet 36, for example, from some external pressurizing device like a pump, or from a path open to the pressure surface 26 and communicated directly to the bleed path 30, or the like.

As shown in Figure 1, the inlet 32 may be of any suitable size and shape. For example, the inlet 32 may be a slot that may extend in a generally radial direction over at least a portion of an area of the suction surface 28 that would experience boundary layer separation but for the slot. However, the inlet 32 may be disposed at any suitable angle with respect to the axis B, and need not be centered between the leading and trailing surfaces 22, 24. In another example, the inlet 32 may be a porous patch on the suction surface 28. For instance, the conduit 34 or at least a portion thereof may be covered by a porous surface flush with the suction surface 28. An example porosity of the porous patch may be 10%-75% porosity.

Prior art Figure 5 illustrates a prior art blade 114 without the bleed path 30, wherein laminar separation and turbulent reattachment occurs over a suction surface 128 to create a bubble area 129 of low energy working fluid. Such a bubble area 129 tends to appear at low Reynolds numbers, creates drag and thereby reduces efficiency of the blade 114 and, in a propeller embodiment, requires more power to move the blade 114.

Figure 6 illustrates another exemplary embodiment of a rotor blade 214. This embodiment is similar in many respects to the embodiment of Figures 1-4 and like numerals between the embodiments generally designate like or corresponding elements throughout the several views of the drawing figures. Additionally, the descriptions of the embodiments are incorporated by reference into one another and the common subject matter generally may not be repeated here. In contrast to prior art Figure 5, Figure 6 illustrates a presently disclosed rotor blade 214 having an inlet 232 of a bleed path 230 disposed in area of the suction surface 228 where the bubble area 129 (Figure 5) would be located if the bleed path 230 were not present. In this embodiment, the inlet 232 can be provided as a porous surface or patch to cover the bubble area 129 (Figure 5). The inlet 232 may be centered (in a circumferential direction between) over an area where the bubble area 129 (Figure 5) would be. Those of ordinary skill in the art will recognize that such sizing and locating is application specific and may be determined via empirical testing or by modeling or both. As shown, a second bleed path 330 and respective inlet 332 may be provided.

In a further embodiment, shown in Figure 4, a plurality of the inlet 32 may be provided, each of which may be sized in correspondence to a radial fluid flow distribution. For example, the inlet 32 may be divided in a radial direction into a plurality of separate inlets, as indicated in Figure 4, corresponding in size and/or shape to different radial pressure gradients along the blade 14. Such an inlet 32 may be thought of as akin to an input side of a harmonica.

Referring to Figures 1-4, the conduit 34 may include any suitable device to convey the working fluid. In one embodiment, the conduit 34 may include one or more separate tubes, pipes, hoses, or the like assembled to the blade 14 in any suitable manner. In another embodiment, the conduit 34 may include an integral void in the blade 14 that may be formed, cast, forged, machined, or the like in the blade 14 in any suitable manner. The conduit 34 may be of any suitable shape and size.

As shown in Figure 3, the outlet 36 may be located in the trailing surface 24 of the blade 14 in one embodiment. In another embodiment, an outlet 36' may be provided in the suction surface 28. In an additional embodiment, both outlets 36, 36' may be used. In any case, the outlet 36 (and/or 36') may be located radially inwardly of the radially outermost surface or tip 20 of the blade 14. This position is generally preferred compared to locating the outlet at the tip of the blade, which is also a possibility within the scope of the invention. The outlet 36 or outlets 36, 36' may be of any suitable shape(s) and size(s).

In one embodiment, the conduit 14 and/or the outlet(s) 36 (36') may be shaped and/or sized to reduce a differential between a velocity of working fluid transmitted from the outlet 36 and a velocity of working fluid in a free stream adjacent the outlet 36. Those of ordinary skill in the art will recognize that such shaping and sizing is application specific and may be determined via empirical testing or by modeling or both.

The presently disclosed bleed path 30 reduces, eliminates, or prevents boundary layer separation over the suction surface 28 of the rotor blade 14, with concomitant reduction, elimination, or prevention in drag and inefficiency of the blade 14. For example, the bleed path 30 may be used to reduce, eliminate, or prevent boundary layer separation whether the flow is laminar or turbulent, and may be particularly beneficial for use in applications with low Reynolds numbers. For instance, it is believed that the presently disclosed bleed path 30 will reduce power required to rotate a propeller and may increase propeller efficiency particularly for relatively small, slowly rotating propellers at high altitudes. Moreover, the bleed path 30 reduces product weight, is low in cost, and does not have any separate moving parts.

Generally, airfoils are designed such that the boundary layer transitions from laminar to turbulent prior to laminar separation. The turbulent boundary layer then naturally remains attached longer because it can tolerate a more adverse pressure gradient than that of a laminar boundary layer. However, at low Reynolds numbers, the laminar boundary layer may separate before transition occurs. If the laminar flow separates, then the process of separation usually induces rapid transition to turbulence. In many cases, this turbulent flow then reattaches because it is more tolerant of the adverse pressure gradient which caused the laminar flow to separate. This laminar separation and turbulent reattachment is called a laminar separation bubble and is a common source of high drag on airfoils used at low Reynolds numbers. In other cases, the separated flow does not reattach, and the resulting drag is even higher.

The presently disclosed passive bleed path(s) may improve efficiency over a large range of conditions, especially at low Reynolds numbers where laminar separation tends to appear. The bleed inlet(s) may be located near the region where laminar separation would occur (if bleed were absent). At low Reynolds numbers, the passive bleed prevents laminar separation such that the boundary layer transitions to turbulent while still attached. The turbulent boundary layer is then able to remain attached because it is more tolerant of an adverse pressure gradient. Therefore, a laminar separation bubble can be prevented, and a substantial source of drag can be eliminated.

Although the bleed inlet(s) may be located near the region of laminar separation, the passive bleed may also be beneficial at higher Reynolds numbers, when the flow is already turbulent over the bleed inlet(s). In this case, the natural turbulent separation point is downstream of the location of the bleed inlet(s), even if bleed were absent. With passive bleed present, the turbulent boundary layer is thinned, thereby delaying separation to a point even farther downstream. This could allow more extreme airfoil shapes to be practical.

This description, rather than describing limitations of an invention, only illustrates example embodiments of the invention recited in the claims. The language of this description is therefore exclusively descriptive and nonlimiting. Obviously, it's possible to modify this invention from what the description teaches. Within the scope of the claims, one may practice the invention other than as described above.

## Claims

1. A rotor blade comprising:
a root region;
a tip region disposed radially outwardly of the root region;
a leading surface extending between the root and tip regions;
a trailing surface extending between the root and tip regions;
a pressure surface extending between the root and tip regions and the leading and trailing surfaces;
a suction surface extending between the root and tip regions and the leading and trailing surfaces; **characterized by**
a bleed path opening to the suction surface, extending through the blade, exiting to at least one of the suction or trailing surfaces, and through which working fluid flows under centrifugal pumping forces when the blade rotates, to passively bleed working fluid from the suction surface.

2. A rotor blade according to claim 1, wherein the working fluid passively flows through the bleed path under negative pressurization, but the working fluid does not actively flow through the bleed path by positive pressurization from some external pressurizing device or from a path open to the pressure surface.

3. A rotor blade according to claim 1or 2, wherein the bleed path includes:
an inlet in the suction surface to receive working fluid on the suction surface;
a conduit in communication with the inlet to convey the working fluid from the inlet toward the tip region; and
an outlet in communication with the conduit and disposed radially outwardly of the inlet to exhaust the working fluid out of the blade.

4. A rotor blade according to claim 3, wherein the bleed path is configured to cause centrifugal pumping forces to pull the working fluid into the inlet, through the conduit, and out of the outlet when the blade rotates.

5. A rotor blade comprising:
a root region;
a tip region disposed radially outwardly of the root region;
a leading surface extending between the root and tip regions;
a trailing surface extending between the root and tip regions;
a pressure surface extending between the root and tip regions and the leading and trailing surfaces;
a suction surface extending between the root and tip regions and the leading and trailing surfaces; **characterized by**
a bleed path opening to the suction surface and including:
an inlet in the suction surface to receive working fluid on the suction surface;
a conduit in communication with the inlet to convey the working fluid from the inlet toward the tip region; and
an outlet in communication with the conduit and disposed radially outwardly of the inlet to exhaust the working fluid out of the blade.

6. A rotor blade according to claim 5, wherein the bleed path is configured such that working fluid flows through the bleed path under centrifugal pumping forces when the blade rotates, to passively bleed working fluid from the suction surface, and such that the working fluid passively flows through the bleed path under negative pressurization, but the working fluid does not actively flow through the bleed path by positive pressurization from some external pressurizing device or from a path open to the pressure surface.

7. A rotor blade according to claim 5 or 6, wherein the outlet is located in at least one of the suction surface or the trailing surface.

8. A rotor blade according to any preceding claim, wherein the inlet is a slot extending in a generally radial direction along the blade.

9. A rotor blade according to any preceding claim comprising a plurality of inlets radially spaced from one another in correspondence to radial pressure gradients.

10. A rotor blade according to any preceding claim, wherein the conduit is shaped or sized to reduce a differential in velocity of working fluid transmitted from the outlet and velocity of working fluid in a free stream adjacent the outlet.

11. A rotor blade according to any preceding claim, wherein the outlet is located radially inward of a radially outermost tip of the blade.

12. A rotor blade according to any preceding claim, wherein the rotor blade is a working member of at least one of an aircraft propeller, a marine propeller, a helicopter rotor, a turbine engine rotor, or a windmill impeller.

13. A rotor comprising:
a hub defining a rotational axis of the rotor; and a plurality of rotor blades as claimed in any preceding claim extending radially outwardly from the hub.

14. A rotor according to claim 13, wherein the bleed path of each rotor blade is located radially outward of a common imaginary circumferential line centred on the rotor axis, said line bisecting each blade.

15. A rotor according to claim 13 or 14, wherein the rotor is at least one of an aircraft propeller, a marine propeller, a helicopter rotor, a turbine engine rotor, or a windmill impeller.
